# EUROPEAN PATENT SPECIFICATION

(11) **EP 1 631 181 B1**
(45) Date of publication and mention of the grant of the patent: **14.07.2010**
(21) Application number: 04733597.1
(22) Date of filing: 18.05.2004
(51) Int. Cl.: A47L 9/22

(54) **DRIVE UNIT FOR AN ELECTRIC CLEANING APPARATUS**
ANTRIEBSEINHEIT FÜR EIN ELEKTRISCHES REINIGUNGSGERÄT
UNITE DE COMMANDE POUR UN DISPOSITIF DE NETTOYAGE ELECTRIQUE

(30) Priority: 20.05.2003 IT UD20030108
(43) Date of publication of application: 08.03.2006
(73) Proprietor: De'Longhi SpA, 31100 Treviso (IT)
(72) Inventor: FOLLEGOT, Rodolfo, I-33087 Pasiano Di Pordenone (IT); CESTER, Francesca, I-31100 Treviso (IT)
(74) Representative: Petraz, Davide Luigi
(86) International application number: PCT/IB2004/001594
(87) International publication number: WO 2004/103143

(56) References cited:
- EP-A- 0 622 044
- WO-A-02/051296
- FR-A- 2 624 715
- US-A- 4 599 529

## Description

### FIELD OF THE INVENTION

The present invention concerns a drive unit for an electric cleaning apparatus, such as a vacuum cleaner, an electric brush, a crumb vacuumer or suchlike. The drive unit according to the present invention comprises an electric motor, a suction fan and a unit to command the motor, and is able to be arranged inside an outer structure of the electric cleaning apparatus, irrespective of the aesthetic form of the latter.

### BACKGROUND OF THE INVENTION

Electric cleaning apparatuses are known, such as for example vacuum cleaners, electric brushes, crumb vacuumers or suchlike, used in household cleaning.

Such known apparatuses normally comprise an outer structure provided inside with a drive unit which creates the suction, and outside with a plurality of accessories, such as suction pipes, handles, grips, suction brushes or otherwise, arranged according to the specific function of the electric cleaning apparatus used.

The drive units normally assembled in known-type apparatuses generally have an electric motor, a unit to command the latter, and a connection portion with the suction body.

Normally the various components of known drive units are autonomous with respect to each other, and are assembled separately and sequentially inside the structure of the electric cleaning apparatus. Moreover, the shape of each component is chosen according to the structure in which the drive unit is installed.

One of the main disadvantages of known drive units is that, due to their specific conformation, they cannot be assembled in structures having different shapes from those for which they have been expressly designed and made.

This disadvantage entails the need to design and construct, every time, a specific drive unit, with specific components, according to the shapes and sizes of the electric cleaning apparatus, with a consequent increase in both the design and production costs of said electric cleaning apparatuses.

Moreover, again because of this disadvantage, different types of spare parts necessarily have to be produced, for each individual model of apparatus, thus increasing both the storage costs in the warehouse and also the distribution costs.

Another disadvantage is that such known drive units consist of a high number of components which, apart from having higher overall costs, tend once they have been assembled to generate vibrations which produce great noisiness of the electric cleaning apparatus.

A drive unit according to the preamble of claim 1 is disclosed in US 4,599,529.

One purpose of the present invention is to achieve a drive unit for an electric cleaning apparatus which is of the substantially universal type, that is, which can be assembled on any electric cleaning apparatus, irrespective of the shape thereof.

Applicant has devised, tested and embodied the present invention to overcome the shortcomings of the state of the art, to achieve this purpose and to obtain other purposes and advantages.

### SUMMARY OF THE INVENTION

The present invention is set forth and characterized in the main claim, while the dependent claims describe other characteristics of the present invention or variants to the main inventive idea.

In accordance with the aforesaid purpose, a drive unit according to the present invention is able to be assembled inside a structure of an electric cleaning apparatus, and comprises at least an electric motor associated with suction means, that create a suction flow inside the structure, and command means, that selectively command the functioning parameters of the electric motor. The electric motor, the suction means and the command means are assembled together and integrated in a single body, so as to be arranged unitarily inside the aforesaid structure, irrespective of the shape thereof.

The drive unit according to the present invention also comprises flange means removably attached on a box-like containing body for the electric motor, which allow to connect the single body, pre-assembled, with the structure of the apparatus.

Such flange means comprise adaptor means that allow to center the single body with respect to the structure, according to the shape of the latter.

It is therefore possible to assemble the drive unit according to the present invention in any electric cleaning apparatus whatsoever, irrespective of the size and shape of the apparatus itself.

This advantage leads to designing a single drive unit, substantially irrespective of the electric cleaning apparatus, with a consequent reduction in both the design and production costs of the electric cleaning apparatuses.

Moreover, with the drive unit according to the present invention it is possible to reduce the number of spare parts, thus reducing the storage costs in the warehouse and also the distribution costs.

Another advantage of the present invention is that, with the reduction in the number of components to be assembled in sequence, the vibrations and noisiness of the electric cleaning apparatus are consequently reduced.

### BRIEF DESCRIPTION OF THE DRAWINGS

These and other characteristics of the present invention will become clear from the following description of a preferential form of embodiment, given as a non-restrictive example, with reference to the attached drawings wherein:
- fig. 1 is an exploded perspective view of an electric cleaning apparatus in which a drive unit according to the present invention is assembled;
- fig. 2 is a three-dimensional view of the drive unit in fig. 1;
- fig. 3 is an exploded perspective view of the drive unit in fig. 1.

### DETAILED DESCRIPTION OF A PREFERENTIAL FORM OF EMBODIMENT

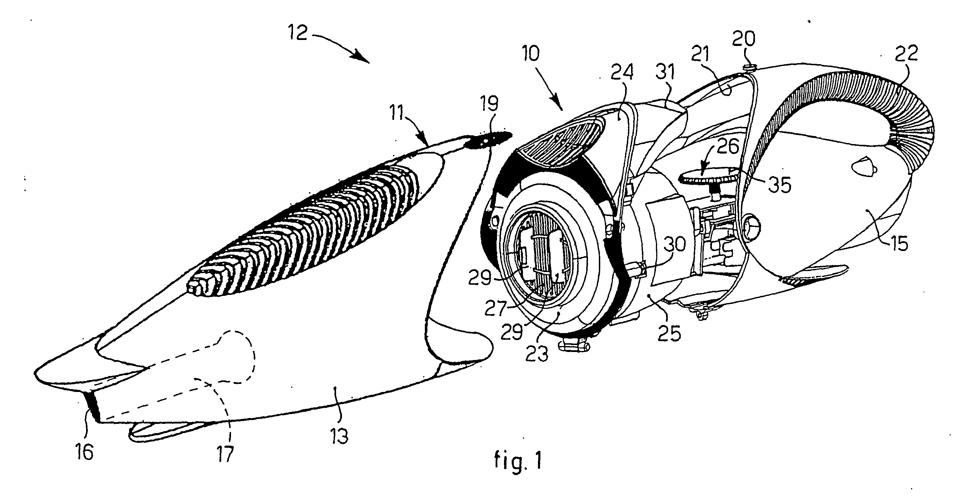

With reference to fig. 1, a drive unit 10 according to the present invention is arranged inside an outer structure 11 of an electric cleaning apparatus 12.

In this case, we shall make specific reference to an electric cleaning apparatus 12, such as a crumb vacuumer, but it is clear that the drive unit 10 can be assembled on any type whatsoever of electric cleaning apparatus, such as a vacuum cleaner, an electric brush or otherwise.

The outer structure 11 comprises two shells 13 and 15, able to be selectively dis-assembled from each other, so as to allow easy access to the drive unit 10.

The shell 13 is arranged, during use, at the front and comprises a suction hole 16 connected to the drive unit 10 by means of a suction pipe 17, so that the activation of the drive unit 10 determines the suction of dirt and dust through the suction hole 16. Inside the shell 13, located between the suction pipe 17 and the drive unit 10, a filter is arranged, of a known type and not shown in the drawings, which allows to filter the air sucked in and to retain the dirt.

The shell 13 also comprises an automatic coupling element 19 able to cooperate with a mating attachment seating 20 made on the shell 15 to maintain the two shells 13 and 15 selectively coupled in removable manner.

The shell 15 comprises an inner housing seating 21, inside which the drive unit 10 is arranged, and an outer gripping handle 22, by means of which the user can comfortably handle the electric cleaning apparatus 12.

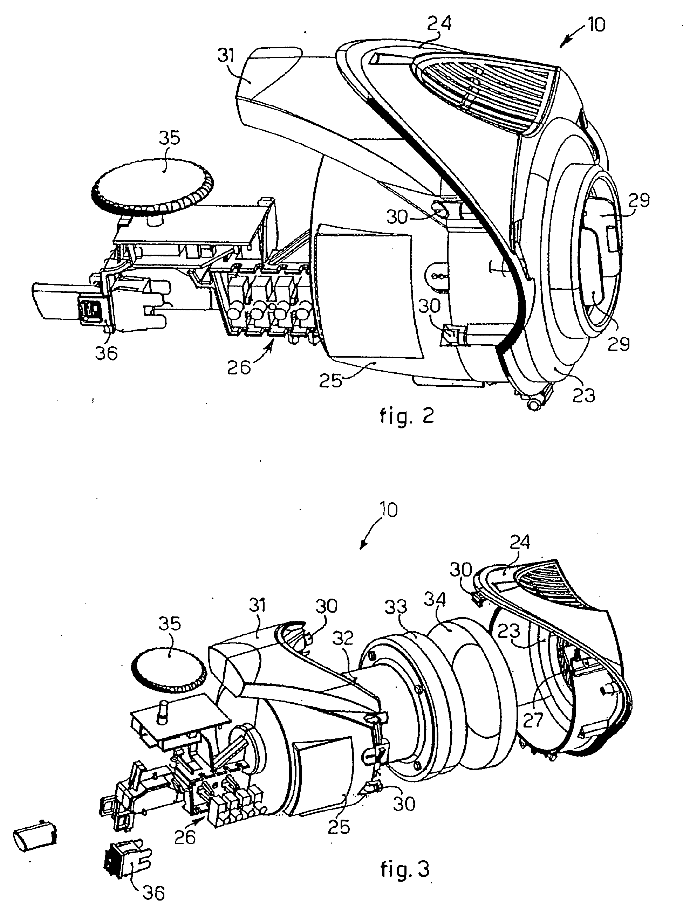

The drive unit 10 comprises a connection flange 23 and a box-like containing body 25, inside which an electric motor 32 is arranged (fig. 3), of a known type, connected to a suction fan 33 which causes a suction flow inside the electric cleaning apparatus 12. The drive unit 10 also comprises a command unit 26 for the electric motor 32.

The connection flange 23 is substantially circular in shape and comprises, in a central zone, a grid 27 for the passage of air and two attachment fins 29 for the filter that retains the dirt.

The connection flange 23 also comprises a shaped crown 24, with a profile mating with that of the housing seating 21, so as to allow to center the drive unit 10 with respect to the relative housing seating 21.

In this case, the shaped crown 24 is made in a piece on the connection flange 23, even if the shaped crown 24 can be removable with respect to the connection flange 23 and temporarily attached to the latter by means of screws or other suitable means.

The connection flange 23 is connected in removable manner to the box-like containing body 25 by means of hooks 30, screws, bayonet type couplings, or otherwise, so as to allow possible inspection of the functional part of the drive unit 10 in a simple and rapid manner.

The box-like containing body 25 is also provided with a lead-in element 31 to facilitate the insertion of the drive unit 10 into the relative housing seating 21.

An annular shock-absorber packing 34 is located between the suction fan 33 and the grid 27 of the connection flange 23, and also guarantees a pneumatic seal.

The lead-in element 31 can also be autonomous with respect to the box-like containing body 25, and can be assembled and dis-assembled independently with respect to the latter.

The command unit 26 is attached to the rear part of the box-like containing body 25.

The command unit 26 is also of a substantially known type and comprises a command knob 35 and a connection interface 36 with an electric cable in turn connected to the electric energy distribution network.

The command knob 35 is able both to switch on the electric motor 32, and also to regulate the functioning parameters thereof, such as the power and the number of revolutions. The command knob 35 is able to protrude, during use, from the upper part of the shell 13 through a suitable aperture, not shown in the drawings, made on the latter. In this way the command knob 35 is constantly accessible to the user for all the steps wherein the electric cleaning apparatus 12 is used.

The command unit 26 is thus integrated with the box-like containing body 25 of the electric motor 32, and contributes to making the entire drive unit 10 compact. The latter is therefore not constrained by the shape of the shells 13 and 15 and consequently that of the electric cleaning apparatus 12 on which it is installed.

In fact, by replacing on the outside only the shaped crown 24, the drive unit 10 can be assembled substantially on any type of electric cleaning apparatus 12.

It is clear, however, that modifications and/or additions of parts can be made to the drive unit 10 as described heretofore, without departing from the present invention.

For example, by replacing the fan 33 by a rotor, and eliminating the filter, it is possible to assemble the drive unit 10 on any domestic electric apparatus 12, such as a kneading machine, a kitchen robot or otherwise, irrespective of their aesthetic form.

It is also clear that, although the present invention has been described with reference to specific examples, a person of skill in the art shall certainly be able to achieve many other equivalent forms of drive unit for an electric cleaning apparatus, all of which shall come within the present invention as defined by the following claims.

## Claims

1. Drive unit able to be assembled inside a structure (11) of an electric cleaning apparatus (12), and comprising at least an electric motor (32) associated with suction means (33) able to create a suction flow inside said structure (11) and command means (26) able to selectively command the functioning parameters of said electric motor (32), said electric motor (32), said suction means (33) and said command means (26) being assembled and integrated together to form a single body, so as to be able to be arranged unitarily inside said structure (11), **characterized in that** said electric motor (32) and said suction means (33) are arranged inside a box-like containing body (25) removably connected to flange means (23) able to connect said single body to said structure (11).

2. Drive unit as in claim 1, **characterized in that** said flange means (23) comprise adaptor means (24) able to allow to center said single body with respect to said structure (11) and according to the shape of said structure (11).

3. Drive unit as in claim 1 or 2, wherein said structure (11) comprises two shells (13, 15) able to be selectively coupled together, **characterized in that** a first (13) of said shells is able to couple with said flange means (23).

4. Drive unit as in claim 3, **characterized in that** said single body is able to be arranged in a housing seating (21) of a second (15) of said shells.

5. Drive unit as in claim 1, **characterized in that** said command means (26) are electrically connected to said electric motor (32) and comprise a command element (35) and a connection interface (36) connected to an electric energy distribution network.

6. Drive unit as in claims 3 and 5, **characterized in that** said command element comprises a knob (35) arranged at least partly outside said first shell (13) and able to allow to regulate said functioning parameters of said electric motor (32).

## Patentansprüche

1. Antriebseinheit, die geeignet ist, innerhalb einer Struktur (11) einer elektrischen Reinigungsvorrichtung (12) montiert zu werden, und die zumindest aufweist:
einen elektrischen Motor (32), der mit Ansaugmitteln (33) verbunden ist, die geeignet sind, einen Ansaugfluss innerhalb der Struktur (11) zu erzeugen, und
Steuerungsmittel (26), die geeignet sind, die Funktionsparameter des elektrischen Motors (32) wahlweise zu steuern,
wobei der elektrische Motor (32), die Ansaugmittel (33) und die Steuerungsmittel (26) montiert und miteinander integriert sind, um einen einzelnen Körper zu bilden, um so geeignet zu sein, als Einheit innerhalb der Struktur (11) angeordnet zu werden,
**dadurch gekennzeichnet,**
**dass** der elektrische Motor (32) und die Ansaugmittel (33) in einem behälterförmigen Aufnahmekörper (25) angeordnet sind, der lösbar mit Flanschmitteln verbunden ist, die geeignet sind, den einzelnen Körper mit der Struktur (11) zu verbinden.

2. Antriebseinheit nach Anspruch 1, **dadurch gekennzeichnet, dass** die Flanschmittel (23) Anpassmittel (24) aufweisen, die geeignet sind, es zu ermöglichen, den einzelnen Körper in Bezug auf die Struktur (11) und entsprechend der Form der Struktur (11) zu zentrieren.

3. Antriebseinheit nach Anspruch 1 oder 2, wobei die Struktur (11) zwei Hüllen (13, 15) aufweist, die geeignet sind, wahlweise miteinander zu koppeln, **dadurch gekennzeichnet, dass** eine Erste (13) der Hüllen geeignet ist, mit den Flanschmitteln (23) zu koppeln.

4. Antriebseinheit nach Anspruch 3, **dadurch gekennzeichnet, dass** der einzelne Körper geeignet ist, an einer Gehäuseauflagefläche (21) einer Zweiten (15) der Hüllen angeordnet zu werden.

5. Antriebseinheit nach Anspruch 1, **dadurch gekennzeichnet, dass** die Steuerungsmittel (26) elektrisch an den elektrischen Motor (32) angeschlossen sind und ein Steuerungselement (35) und eine Varbindungsschnittstelle (36) aufweisen, die an ein Verteilernetz für elektrische Energie angeschlossen ist,

6. Antriebseinheit nach Anspruch 3 oder 5, **dadurch gekenntzeichnet, dass** das Steuerungselement einen Drehknopf (35) aufweist, der zumindest teilweise außerhalb der ersten Hülle (13) angeordnet ist und, der geeignet ist, es zu ermöglichen, die Funktionsparameter des elektrischen Motors (32) einzustellen.

## Revendications

1. Unité de commande qui peut être assemblée à l'intérieur d'une structure (11) d'un appareil de nettoyage électrique (12), et comprenant au moins un moteur électrique (32) associé à des moyens d'aspiration (33) capables de créer un flux d'aspiration à l'intérieur de ladite structure (11) et des moyens de commande (26) capables de commander de manière sélective les paramètres de fonctionnement dudit moteur électrique (32), ledit moteur électrique (32), lesdits moyens d'aspiration (33) et lesdits moyens de commande (26) étant assemblés et intégrés, ensemble, pour former un corps unique, de manière à pouvoir être agencés unitairement à l'intérieur de ladite structure (11), **caractérisée en ce que** ledit moteur électrique (32) et lesdits moyens d'aspiration (33) sont agencés à l'intérieur d'un corps de logement (25) du type boite relié de manière amovible à des moyens formant bride (23) capables de relier ledit corps unique à ladite structure (11).

2. Unité de commande selon la revendication 1, **caractérisée en ce que** lesdits moyens formant bride (23) comprennent des moyens d'adaptation (24) qui permettent de centrer ledit corps unique par rapport à ladite structure (11) et en fonction de la forme de ladite structure (11).

3. Unité de commande selon la revendication 1 ou 2, dans laquelle ladite structure (11) comprend deux coques (13, 15) qui peuvent être accouplées de manière sélective l'une à l'autre, **caractérisée en ce qu'**une première (13) desdites coques peut être accouplée auxdits moyens formant bride (23).

4. Unité de commande selon la revendication 3, **caractérisée en ce que** ledit corps unique peut être agencé dans un siège de logement (21) d'une deuxième (15) desdites coques.

5. Unité de commande selon la revendication 1, **caractérisée en ce que** lesdits moyens de commande (26) sont connectés électriquement audit moteur électrique (32) et comprennent un élément de commande (35) et une interface de connexion (36) connectée à un réseau de distribution d'énergie électrique.

6. Unité de commande selon les revendications 3 et 5, **caractérisée en ce que** ledit élément de commande comprend un bouton (35) agencé au moins partiellement à l'extérieur de ladite première coque (13) et qui permet de réguler lesdits paramètres de fonctionnement dudit moteur électrique (32).
